(19) Europäisches Patentamt
European Patent Office
Office européen des brevets

(11) **EP 2 014 131 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(51) Int Cl.:
***H04Q 11/04*** *(2006.01)*

(21) Anmeldenummer: **07727153.4**

(22) Anmeldetag: **21.03.2007**

(86) Internationale Anmeldenummer:
**PCT/EP2007/052676**

(87) Internationale Veröffentlichungsnummer:
**WO 2007/113110 (11.10.2007 Gazette 2007/41)**

(54) **VERFAHREN, ANORDNUNG UND EINRICHTUNG ZUR ÜBERMITTLUNG VON INFORMATIONEN ZWISCHEN EINER ZENTRALEN UND ZUMINDEST EINER DEZENTRALEN EINHEIT IN EINEM KOMMUNIKATIONSNETZ**

METHOD, ARRANGEMENT AND DEVICE FOR TRANSMITTING INFORMATION BETWEEN A CENTRAL UNIT AND AT LEAST ONE DECENTRALISED UNIT IN A COMMUNICATION NETWORK

PROCÉDÉ, AGENCEMENT ET DISPOSITIF DE TRANSMISSION D'INFORMATIONS ENTRE UNE UNITÉ CENTRALE ET AU MOINS UNE UNITÉ DÉCENTRALISÉE DANS UN RÉSEAU DE COMMUNICATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.03.2006 DE 102006015055**

(43) Veröffentlichungstag der Anmeldung:
**14.01.2009 Patentblatt 2009/03**

(73) Patentinhaber: **ADTRAN GmbH**
**10557 Berlin (DE)**

(72) Erfinder: **GERNEGROSS, Dietmar**
**82041 Oberhaching (DE)**

(74) Vertreter: **Brachmann, Roland W. et al**
**Von Lieres Brachmann Schulze**
**Patentanwälte**
**Grillparzerstrasse 12A**
**81675 München (DE)**

(56) Entgegenhaltungen:
**EP-A- 1 300 964 WO-A-2007/008836**

- **JACOBSEN K S ET AL: "Methods of Upstream Power Backoff on Very High-Speed Digital Subscriber Lines" IEEE COMMUNICATIONS, [Online] Bd. 39, Nr. 3, 1. März 2001 (2001-03-01), Seiten 210-216, XP002441084 Gefunden im Internet: URL:http://www.comsoc.org/ci/private/2001/ mar/jacobsen.html> [gefunden am 2007-07-05]**
- **SIGURD SCHELSTRAETE: "Defining Upstream Power Backoff for VDSL" IEEE JOURNAL ON SELECTED AREAS IN COMMUNICATIONS, IEEE SERVICE CENTER, PISCATAWAY, US, Bd. 20, Nr. 5, Juni 2002 (2002-06), XP011065502 ISSN: 0733-8716**

**Beschreibung**

Die Erfindung betrifft ein Verfahren, eine Anordnung und eine Einrichtung zur Übermittlung von Informationen zwischen einer zentralen und zumindest einer dezentralen Einheit in einem Kommunikationsnetz.

In aktuellen Kommunikationsnetzen werden von den Nutzern zunehmend höhere Datenübertragungsraten gewünscht. Übertragungsverfahren, die hohe Übertragungsraten auch in den Teilnehmeranschlussnetzen (Access-Networks) eines Kommunikationsnetzes bereitstellen können, sind beispielsweise Verfahren, die nach dem xDSL-Verfahren arbeiten. Mit Hilfe dieser Übertragungsverfahren können die Betreiber von Kommunikationsnetzen ihren Kunden auch breitbandige Anschlüsse beispielsweise an das Internet anbieten, mittels derer die Teilnehmer zahlreiche Anwendungen oder Applikationen zunehmend einfacher und schneller nutzen können. Ein Beispiel für eine derartige datenintensive Anwendung, für die hohe Übertragungsraten benötigt werden, ist etwa die Übertragung von Video-Dateien über das Internet.

Ausführungsarten des oben erwähnten xDSL-Verfahrens sind beispielsweise das so genannte VDSL-Verfahren ("Very high speed Digital Subscriber Line") und das VDSL2-Verfahren. Dabei werden bei VDSL auf der herkömmlichen Telefonleitung zwischen amtseitiger erster Vermittlungsstelle (zumeist ein so genannter "DSLAM" - "digital subscriber line access multiplexer") und Teilnehmeranschluss Übertragungsraten von 13 MBit/s bis 55 MBit/s im Downstream (von der Vermittlungsstelle zum Teilnehmer) und im Upstream (vom Teilnehmer zur Vermittlungsstelle) Übertragungsgeschwindigkeiten zwischen 1,5 MBit/s und 15 MBit/s erreicht. Mit VDSL2 lassen sich sogar Übertragungsgeschwindigkeiten von bis zu 100 MBit/s (Downstream und Upstream)erzielen. Die Übertragung der Informationen oder Daten erfolgt dabei nach dem so genannten "Frequenzgetrenntlage-Verfahren", d.h. nach einem Verfahren bei dem die Frequenzbänder für Downstream und Upstream getrennt sind. So sind bei VDSL grundsätzlich beispielsweise jeweils zwei Downstream- und zwei Upstream-Frequenzbänder vorgesehen, die sich insgesamt über das Frequenzspektrum von 135 kHz bis 12 MHz erstrecken. Bei VDSL2 werden für Downwstream und Upstream derzeit jeweils bis zu drei Frequenzbänder verwendet, die sich zusätzlich zu dem bei VDSL genutzten Spektrum noch über die Frequenzen von 12 MHz bis 30 MHz verteilen.

Die oben erwähnte physikalische Verbindung zwischen einem Teilnehmer und der Vermittlungsstelle (d.h. die herkömmliche Telefonleitung) besteht dabei zumeist aus einem Adernpaar, zumeist aus einer Kupfer-Doppelader. Da mehrere dieser Teilnehmeranschlussleitungen gebündelt innerhalb eines Kabels zusammengefasst liegen können, kommt es zwischen den in einem Kabelbündel geführten Adern zu Interferenzen und Störungen. Diese Störungen bzw. die auf den Leitungen auftretenden Störgeräusche machen sich besonders an den Empfängereingängen des Übertragungssystems bemerkbar. Derartige Störungen werden auch als "Nebensprechen" ("crosstalk") bezeichnet und sind frequenzabhängig. Dabei wird zusätzlich zwischen dem so genannten "Nahnebensprechen" (NEXT - "near end crosstalk") und dem "Fernnebensprechen" (FEXT - "far end crosstalk") unterschieden.

Das Nahnebensprechen, das auch als "Querdämpfung" bezeichnet wird, ist ein Maß für die Unterdrückung des Übersprechens zwischen zwei benachbarten Adernpaaren am Anfang/Ende des Kabels. Das Nahnebensprechen gibt an, wie stark das Signal eines Adernpaars in ein anderes Adernpaar am Ort der Einspeisung, also am Sender, induziert wird. Im Gegensatz dazu bezieht sich das Fernnebensprechen auf das ferne Leitungsende, also das empfängerseitige Ende der Übertragungsstrecke. Ein in eine Ader eingespeistes Signal ist am Leitungsende um die Kabeldämpfung verringert. Das Störgeräusch, das durch Übersprechen dieses Signals auf eine andere Ader am empfängerseitigen Ende auftritt, wird als Fernnebensprechen bezeichnet.

Solches System ist zum Beispiel offenbart im Dokument EP 1 300 964 A.

Bei xDSL-Übertragungssystemen, die nach dem oben erwähnten Frequenzgetrenntlage-Verfahren arbeiten (wie etwa VDSL2), sind im Wesentlichen die durch FEXT erzeugten Störungen für eine maximal erreichbare Datenrate, also für die so genannte Performance, bestimmend. Speziell bei der VDSL2-Übertragungstechnik, die zur Übertragung, wie oben erwähnt, auch hohe Frequenzbereiche nutzt (bis 30 MHz), kann die Performance durch das FEXT-Störgeräusch dabei erheblich reduziert werden. Zusätzlich erhöht wird das Problem der FEXT-Störgeräusche noch, wenn die einzelnen Anschlussleitungen unterschiedliche Entfernungen zur Amtseite besitzen. Würden beispielsweise sämtliche Teilnehmeranschlüsse mit der selben Sendeleistung versorgt, so würden kürzere Leitungen, also solche Leitungen, deren Teilnehmer näher an der Amtseite angeordnet sind, amtsseitig eine deutlich höhere Signalempfangsleistung aufweisen als die Signale auf längeren Leitungen, die über eine längere Strecke gedämpft wurden. Diese stärkeren Signalleistungen auf kürzeren Teilnehmeranschlussleitungen würden schwächere Signale auf längeren Anschlussleitungen stark stören, was zu stark unterschiedlichen Perfomances der einzelnen Teilnehmeranschlüsse führen würde.

Um dieses Problem zu lösen, ist im ITU-Standard G.993.2, Kapitel 7.2.1.3 und in ITU G.997.1 die Möglichkeit des so genannten "Upstream Power Back-Off" (UPBO) vorgesehen. Mittels des UPBO-Mechanismus wird die Upstream-Sendeleistung so gesteuert, dass am Empfangsort alle Upstream-Signale möglichst denselben Signalpegel aufweisen. Dadurch wird sichergestellt, dass alle Teilnehmer in etwa eine ähnliche Datenrate auf der entsprechenden Teilnehmeranschlussleitung zur Verfügung gestellt bekommen können. Durch das UPBO wird die spektrale Verträglichkeit der Anschlussleitungen verbessert.

Zur Durchführung des UPBO-Mechanismus werden die im Folgenden erläuterten Schritte während einer Trainingsphase beim Verbindungsaufbau durchgeführt. Zu Beginn des Trainings übermittelt die amtseitige Übertragungseinheit (DSLAM) der Teilnehmereinheit vorgebbare Standardsignale. Diese können beispielsweise Informationen enthalten über die Signalleistung, mit denen diese Signale versendet wurden, und auch Vorgaben in Bezug auf die Leistung, mit denen vom Teilnehmer aus gesendete Upstream-Signale am DSLAM ankommen sollen. Anhand dieser Informationen werden in einem ersten Schritt durch die Teilnehmereinheit Leitungsparameter der Verbindungsstrecke ermittelt. Dabei wird beispielsweise die Signalstärke der empfangenen Signale erfasst und mittels der Information über die ursprüngliche Sendeleistung der Signale die Dämpfung innerhalb der Anschlussleitung bzw. ein entsprechender Wert für die elektrische Länge der Leitung (üblicherweise bezeichnet mit $kl_0$) geschätzt. Mit Hilfe dieses Wissens kann in der Teilnehmereinheit die Sendeleistung derart festegelegt werden, dass die Signale die Amtseite möglichst genau mit der vom DSLAM geforderten Leistung erreichen sollten. Werte für diese geforderte Empfangsleistung können vom Betreiber des Kommunikationsnetzes beispielsweise über Netzmanagementeinstellungen vorgegeben werden. Zum Ende der Trainingsphase wird abschließend noch der die Sendeleistung repräsentierende Wert von der Teilnehmereinheit an den DSLAM übermittelt.

Wie oben beschrieben wird durch den UPBO-Mechanismus versucht, die Empfangsleistung aller Teilnehmeranschlussleitungen auf einen möglichst ähnlichen Wert zu legen, um möglichst geringe Auswirkungen durch FEXT-Störungen zu erhalten. Bei dieser Überlegung wird jedoch übersehen, dass Teilnehmer mit kürzeren Anschlussleitungen ohne weiteres mit einer im Verhältnis etwas höheren Sendeleistung arbeiten können (und somit eine höhere Empfangsleistung und eine bessere Performance besitzen), ohne zusätzliche FEXT-Störungen auf den im Vergleich längeren Anschlussleitungen hervorzurufen: Da die durch FEXT verursachten Störungen am Ende einer Leitung auch von der gesamten Länge der zuvor zu überbrückenden Anschlussleitung abhängig sind, können Teilnehmereinheiten mit kürzerem Abstand zur Amtseite tatsächlich mit höherer Leistung senden, ohne die erlaubte Grenze an erzeugten FEXT-Störungen zu überschreiten. Eine höhere Sendeleistung auf der Teilnehmerseite allein erzeugt auf kurzen Anschlussleitungen nicht automatisch zu große FEXT-Störungen auf der Amtseite; derartige FEXT-Störungen fallen auch bei höherer Sendeleistung aufgrund der Kürze der Leitung (d.h. größere FEXT-Dämpfung, weniger Übersprechen) nicht stärker an als beispielsweise bei niedrigeren Sendeleistungen auf längeren Anschlussleitungen.

Um für einzelne Teilnehmer (für solche, die näher an der Amtseite sitzen) eine höhere Performance zu erreichen, kann demnach deren Sendeleistung auf einen höheren Pegel gehoben werden, ohne dass andere Teilnehmer über das erlaubte Maß hinaus gestört werden.

(Eine weitere Möglichkeit wäre, nicht etwa die Sendeleistung der kürzeren Anschlussleitungen zu erhöhen, sondern die sich dadurch ergebende bessere Performance der längeren Anschussleitungen zu nutzen. Somit bestünde beispielsweise die Möglichkeit, dass bei Gesamtbetrachtung des DSLAM-Anschlussbereichs an Stelle der Performanceverbesserung für einzelne Anschlussleitungen die Performance für alle Teilnehmer ausgewogen erhöht werden kann.)

Für den oben betrachteten Fall, dass die in Bezug auf die Vermittlungsseite näher gelegenen Teilnehmer mit höherer Sendeleistung arbeiten und somit eine bessere Performance erhalten, ergibt sich jedoch ein Problem: eine derartige Erhöhung der Sendeleistung für einzelne Teilnehmeranschlüsse ist in den oben zitierten Standards und insbesondere den weiter unten detaillierter beschriebenen standardgemäßen Berechnungen der Sendeleistung in den einzelnen Teilnehmereinheiten nicht vorgesehen.

Die Aufgabe der Erfindung ist daher, Verfahren zur Übermittlung von Informationen zwischen einer zentralen und zumindest einer dezentralen Einheit in einem Kommunikationsnetz zu verbessern und beispielsweise die Performance der Verfahren zu erhöhen.

Diese Aufgabe wird ausgehend von einem Verfahren gemäß den Merkmalen des Patentanspruchs 1 sowie von einer Anordnung und Einrichtung gemäß den Merkmalen der Patentansprüche 9 bzw. 10 gelöst.

Im Rahmen des erfindungsgemäßen Verfahrens zur Übermittlung von Informationen zwischen einer zentralen und zumindest einer dezentralen Einheit in einem Kommunikationsnetz, wird in der zumindest einen dezentralen Einheit ein einen Abstand zwischen der zentralen und der zumindest einen dezentralen Einheit repräsentierender Wert erfasst und dieser an die zentrale Einheit übermittelt. Der wesentliche Aspekt der Erfindung ist, dass in der zentralen Einheit anhand des den Abstand repräsentierenden Werts ein einen fiktiven Abstand zwischen der zentralen und der zumindest einen dezentralen Einheit repräsentierender Wert ermittelt wird, dieser an die zumindest eine dezentrale Einheit übermittelt wird und die Übermittlung der Informationen in Abhängigkeit von dem den fiktiven Abstand repräsentierenden Wert erfolgt.

Der wesentliche Vorteil des erfindungsgemäßen Verfahrens besteht unter anderem darin, dass einzelne Teilnehmereinheiten eine höhere Sendeleistung und somit eine bessere Performance erreichen können, ohne dass an den Teilnehmereinheiten selbst Veränderungen vorgenommen werden müssen.

Vorteilhaft wird in der dezentralen Einheit mittels des übermittelten, den fiktiven Abstand repräsentierenden Werts ein spektraler Verlauf der Sendeleistungsdichte bestimmt und die Übermittlung der Informationen erfolgt in Abhängigkeit von dem spektralen Verlauf der Sendeleistungsdichte - Anspruch 2. Dies kann im Rahmen der üblichen standardkonformen Prozeduren zum Verbindungsaufbau erfolgen.

Vorteilhaft erfolgen das Erfassen des den Abstand repräsentierenden Werts und das Übermitteln des den Abstand repräsentierenden Werts innerhalb einer Trainingsphase - Anspruch 3. Dadurch können die Verbindungseinstellungen bereits beim Aufbau einer Verbindung festgelegt werden.

Vorteilhaft können auch das Erfassen des den Abstand repräsentierenden Werts, das Übermitteln des den Abstand repräsentierenden Werts, das Ermitteln des den fiktiven Abstand repräsentierenden Werts und die Übermittlung des den fiktiven Abstand repräsentierenden Werts während einer Trainingsphase erfolgen - Anspruch 4. Dies verbessert die eigentliche Trainingsphase und ermöglicht somit, optimierte Verbindungseinstellungen noch vor der eigentlichen Etablierung der Verbindung festzulegen.

Weitere Ausführungsformen des erfindungsgemäßen Verfahrens, eine Anordnung sowie eine Einrichtung zum Übermitteln von Informationen zwischen einer zentralen und zumindest einer dezentralen Einheit in einem Kommunikationsnetz können den weiteren Ansprüchen entnommen werden.

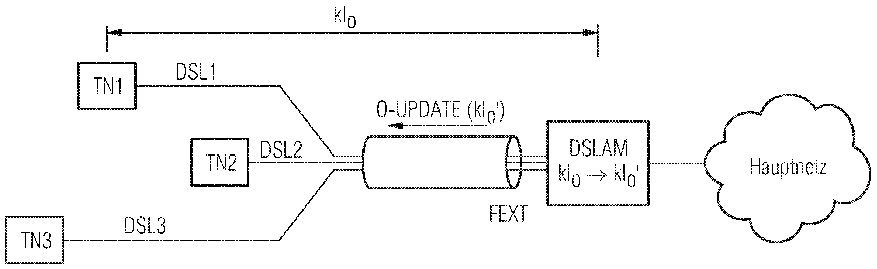

Im Folgenden wird das erfindungsgemäße Verfahren mit Hilfe der beigefügten Zeichnung (Fig. 1) detaillierter erläutert.

Figur 1    zeigt in einem schematischen Diagramm beispielhaft den prinzipiellen Aufbau eines herkömmlichen Teilnehmeranschlussnetzwerks ("access network"). Drei Teilnehmer (TN1, TN2, TN3) des Kommunikationssystems sind über ihre jeweiligen Teilnehmeranschlussleitungen (DSL1, DSL2, DSL3) mit der Amtseite verbunden. Die erste amtsseitige Einheit ist ein DSLAM. Dieser sammelt die Informationen oder Daten der einzelnen Anschlussleitungen und gibt diese weiter in das Hauptnetz des Kommunikationssystems. Bei diesem Hauptnetz ("Backbone") kann es sich beispielsweise um ein IP-Netz handeln.

Die drei Teilnehmeranschlussleitungen (DSL1, DSL2, DSL3) besitzen eine unterschiedliche Länge, sind also in unterschiedlicher Entfernung vom DSLAM angeordnet. Mögliche Längen der einzelnen Leitungen wären z.B. 700m für DSL1, 400m für DSL2 und 1000m für DSL3. Wie in Fig.1 zu erkennen ist, ist jeweils ein Teil (der amtsseitige Abschnitt der Leitungen) in einem gemeinsamen Kabelbündel zusammengefasst. Innerhalb dieses Kabels kommt es daher zu dem oben erwähnten Effekt des Nebensprechens. Die drei Anschlussleitungen (DSL1, DSL2, DSL3) stören sich gegenseitig.

Während der bei einem Verbindungsaufbau obligatorischen Trainingsphase, d.h. dem Einstellen oder Konfigurieren der Verbindungsparameter zwischen DSLAM und einem Teilnehmer (TN1, TN2 oder TN3), werden unter anderem die im Folgenden beschriebenen Schritte durchlaufen. Dabei wird nun beispielhaft angenommen, dass zwischen der amtseitigen Übertragungseinheit (DSLAM) und in diesem Beispiel dem Teilnehmer TN1 eine Verbindung nach dem VDSL-Verfahren aufgebaut wird.

Zu Beginn werden ausgehend vom DSLAM gemäß den ITU-Standards G.993.2 und G.997.1 zur Organisation des oben erläuterten UP-BO-Mechanismus Testsignale mit einer bestimmten Leistungsstärke an die Teilnehmereinheit TN1 übermittelt. Unter anderem werden auch Informationen darüber übermittelt, mit welcher Leistungsstärke die von der Teilnehmereinheit gesendeten Signale den DSLAM erreichen sollen.

Basierend auf diesen Parametern und der am Teilnehmeranschluss erfassten Signalstärke der empfangenen Signale wird in der Teilnehmereinheit (TN1) anschließend eine für die entsprechende Anschlussleitung gültige elektrische Länge der Verbindung ($kl_0$) geschätzt. Mittels dieses Schätzwerts für den Abstand zwischen Teilnehmereinheit und amtsseitiger Übertragungseinheit wird gemäß ITU G.993.2 bzw. G.997.1 üblicherweise in der Teilnehmereinheit (TN1) die so genannte UPBO-Sendemaske anhand folgender Formel (1) ermittelt:

$$\mathrm{UPBOMASK}\left(kl_0,\ f\right) = \mathrm{UPBOPSD(f)} + \mathrm{LOSS}\left(kl_0,\ f\right) + 3{,}5\ \left[\mathrm{dBm/Hz}\right] \qquad (1)$$

Dabei sind LOSS($kl_0$, f) und UPBOPSD(f) wie folgt definiert:

$$\mathrm{LOSS}\left(kl_0,\ f\right) = kl_0 * \sqrt{f} \qquad (2)$$

$$\mathrm{UPBOPSD(f)} = -\,a - b * \sqrt{f}\ \left[\mathrm{dBm/Hz}\right], \mathrm{mit\ f\ in\ MHz} \qquad (3)$$

In einem weiteren Schritt wird die geschätzte elektrische Länge ($kl_0$) von der Teilnehmereinheit an den DSLAM übermittelt.

Wie in der Beschreibungseinleitung beschrieben, ist die oben erwähnte Formel zur Einstellung der UPBO-Sendemaske und somit zur Sendeleistung der Teilnehmereinheit jedoch nicht optimiert. Teilnehmereinheiten mit kürzeren Anschlussleitungen können mit einer im Vergleich zu obiger Formel höheren Sendeleistung senden, ohne dass dadurch anderen Teilnehmern Nachteile entstehen.

Daher kann die Formel für die UPBO-Sendemaske folgendermaßen modifiziert werden:

$$\mathrm{UPBOMASK}(\mathrm{kl}_0, \mathrm{f}) = \mathrm{UPBOPSD}(\mathrm{f}) + \mathrm{LOSS}(\mathrm{kl}_0, \mathrm{f}) + 3{,}5 + \mathrm{FEXT\_Korrektur} \quad [\mathrm{dBm/Hz}] \quad (4)$$

Der zusätzliche Parameter "FEXT_Korrektur" ist also ein Korrekturparameter zur Verbesserung der zum Ausgleich der FEXT-Störungen nach der ursprünglichen Formel nicht optimal berechneten Signalleistung. Dabei kann FEXT_Korrektur abhängig von der elektrischen Länge $\mathrm{kl}_0$ sowie von der Frequenz sein. Werte für FEXT_Korrektur können beispielsweise durch empirisch erfasste Daten aufgenommen werden. Des Weiteren kann aus derartigen Daten beispielsweise auch eine Funktion für die entsprechenden Werte der jeweiligen FEXT_Korrektur abgeleitet oder angenähert werden.

Die Benutzung der optimierten Formel (4) zur Bestimmung der Sendemaske für den Teilnehmeranschluss TN1 erfolgt erfindungsgemäß in der zentralen Einheit (DSLMA) auf der Amtseite. Dies hat den Vorteil, dass diese erweiterte Formel einzig in der zentralen Einheit bekannt sein muss. D.h. bei einer Verwendung der optimierten (zurzeit nicht standardisierten) Formel muss nur in der zentralen Einheit eine Änderung des Berechnungsalgorithmus durchgeführt werden. Die einzelnen Teilnehmereinheiten können unverändert bleiben, was eine deutliche Verringerung des Konfigurationsaufwands bedeutet.

Mit Hilfe der optimierten Formel (4) zur Bestimmung der Sendemaske wird im DSLAM nun ein fiktiver zweiter den Abstand zwischen Teilnehmereinheit (TN1) und DSLAM repräsentierender Wert ($\mathrm{kl}_0$') errechnet. Dieser Wert ($\mathrm{kl}_0$') gibt jenen Abstand an, den die Teilnehmereinheit TN1 von der Amtseite (DSLAM) besitzen müsste, um - bei einer Berechnung gemäß der ursprünglichen Formel (1) - mit der zuvor im DSLAM bestimmten neuen, optimierten Sendeleistung zu senden.

Dieser fiktive Abstandswert ($\mathrm{kl}_0$') wird anschließend an die Teilnehmereinheit TN1 übermittelt. Dazu wird der in den ITU-Standards G.993.2 und G.997.1 vorgesehene Befehl "O-UPDATE" genutzt (siehe Kapitel 12.3.3.2.1.2 in G.993.2). Mit diesem Befehl wird es der amtseitigen Übertragungseinheit ermöglicht, der dezentralen Teilnehmereinheit (TN1) einen bestimmten Abstandswert vorzugeben.

Direkt im Anschluss an die standardisierte Trainingsphase wird somit noch vor der eigentlichen Initialisierung der Verbindung der "O-UPDATE"-Befehl genutzt, um den vom DSLAM ermittelten, fiktiven Abstand ($\mathrm{kl}_0$') an den Teilnehmeranschluss TN1 zu übermitteln.

Abschließend wird in Teilnehmeranschluss TN1 der übermittelte Wert von $\mathrm{kl}_0$' verwendet, um die Sendemaske neu zu berechnen. Es wird in der Teilnehmeranschlusseinheit TN1 somit der fiktive Abstand $\mathrm{kl}_0$' genutzt, um unter Verwendung der ursprünglichen, in TN1 weiterhin gültigen Formel (1) die erhöhte Sendeleistung bzw. den optimierten spektralen Verlauf der Sendeleistungsdichte zu erreichen.

Denkbar wäre des Weiteren, dass beispielsweise der DSLAM selbst die neue, höhere Sendeleistung berechnet, und diese direkt an die Teilnehmereinheiten (TN1) übermittelt.

Das erfindungsgemäße Vorgehen hat den Vorteil, dass einerseits ein in den beteiligten Einheiten bereits implementierter Befehl bzw. Vorgang genutzt wird, sowie dass andererseits zusätzlich sowohl die Übermittlung des Werts für den Abstand als auch das Vorschreiben eines bestimmten (des optimierten) Werts standardkonform ablaufen kann. Somit können alle standardkonformen Teilnehmeranschlusseinheiten (TN1, TN2, TN3) ohne Veränderungen weiterhin benutzt werden.

Auch ist für das erfindungsgemäße Verfahren beispielsweise kein Software-Update in den Teilnehmereinheiten (TN1, TN2, TN3) nötig. Ein Software-Update wäre eine Möglichkeit, die zwar beispielsweise dazu genutzt werden könnte, um die optimierte Formel zur Berechnung der Sendemaske in den Teilnehmereinheiten (TN1, TN2, TN3) zu implementieren. Dies würde aber dazu führen, dass die einzelnen Einheiten (TN1, TN2, TN3) nicht mehr gemäß den zitierten Standards arbeiten würden, d.h. dass diese nicht mehr mit herkömmlichen zentralen Übertragungseinheiten (DSLAM) zusammen arbeiten könnten. Außerdem ergeben sich Probleme, wenn Teilnehmereinheiten, die nach Standard arbeiten, und Teilnehmereinheiten, die mit optimierter Formel arbeiten, gemeinsam an einem DSLAM angeschaltet werden. Derartige Nachteile werden durch das erfindungsgemäße Verfahren ausgeschlossen.

Ein weiterer Vorzug des erfindungsgemäßen Verfahrens ist die wenig aufwändige Möglichkeit zur Änderung von Konfigurationseinstellungen. Sollten beispielsweise Änderungen in Bezug auf Sendeleistung, Datenvolumen o.Ä. durch den Betreiber eines Kommunikationsnetzes vorgenommen werden, so müssen derartige Änderungen nur auf der Amtseite (im DSLAM) vorgenommen werden. Die Teilnehmereinheiten bleiben davon gänzlich unberührt.

**Patentansprüche**

1. Verfahren zur Übermittlung von Informationen zwischen einer zentralen (DSLAM) und zumindest einer dezentralen Einheit (TN1, TN2, TN3) in einem Kommunikationsnetz, bei dem in der zumindest einen dezentralen Einheit (TN1, TN2, TN3) ein einen Abstand zwischen der zentralen (DSALM) und der zumindest einen dezentralen Einheit (TN1, TN2, TN3) repräsentierender Wert ($kl_0$) erfasst und dieser ($kl_0$) an die zentrale Einheit (DSLAM) übermittelt wird, **dadurch gekennzeichnet,** **dass** in der zentralen Einheit (DSLAM) anhand des den Abstand repräsentierenden Werts ($kl_0$) ein einen fiktiven Abstand zwischen der zentralen und der zumindest einen dezentralen Einheit repräsentierender Wert ($kl_0'$) ermittelt wird, wobei der fiktive Abstand einen Abstand zwischen der zentralen Einheit und der mindestens einen dezentralen Einheit angibt, um mit einer optimierten Sendeleistung zu senden, dieser fiktive Abstand an die zumindest eine dezentrale Einheit (TN1, TN2, TN3) übermittelt wird und die Übermittlung der Informationen in Abhängigkeit von dem den fiktiven Abstand repräsentierenden Wert ($kl_0'$) erfolgt.

2. Verfahren nach Anspruch 1, **dadurch gekennzeichnet,** **dass** in der dezentralen Einheit (TN1, TN2, TN3) mittels des übermittelten, den fiktiven Abstand repräsentierenden Werts ($kl_0'$) ein spektraler Verlauf der Sendeleistungsdichte bestimmt wird und die Übermittlung der Informationen in Abhängigkeit von dem spektralen Verlauf der Sendeleistungsdichte erfolgt.

3. Verfahren nach Anspruch 1 oder 2, **dadurch gekennzeichnet,** **dass** das Erfassen des den Abstand repräsentierenden Werts ($kl_0$) und das Übermitteln des den Abstand repräsentierenden Werts ($kl_0$) innerhalb einer Trainingsphase erfolgen.

4. Verfahren nach Anspruch 1 oder 2, **dadurch gekennzeichnet,** **dass** das Erfassen des den Abstand repräsentierenden Werts ($kl_0$), das Übermitteln des den Abstand repräsentierenden Werts ($kl_0$), das Ermitteln des den fiktiven Abstand repräsentierenden Werts ($kl_0'$) und die Übermittlung des den fiktiven Abstand repräsentierenden Werts ($kl_0'$) während einer Trainingsphase erfolgen.

5. Verfahren nach einem der vorherigen Ansprüche, **dadurch gekennzeichnet,** **dass** der den Abstand repräsentierende Wert ($kl_0$) aus einer bei der Übermittlung der Informationen auftretenden Dämpfung abgeleitet wird.

6. Verfahren nach einem der vorherigen Ansprüche, **dadurch gekennzeichnet,** **dass** die Übermittlung von Informationen gemäß einem xDSL-Verfahren erfolgt.

7. Verfahren nach einem der vorherigen Ansprüche, **dadurch gekennzeichnet,** **dass** die Übermittlung von Informationen gemäß dem VDSL- oder VDSL2-Verfahren erfolgt.

8. Verfahren nach einem der vorherigen Ansprüche, **dadurch gekennzeichnet,** **dass** die Übermittlung von Informationen und/oder die Trainingsphase gemäß den ITU-Standards G.993.2 und/oder G.997.1 erfolgen.

9. Verfahren nach Anspruch 8, **dadurch gekennzeichnet,** **dass** der die Sendeleistung repräsentierende Wert ($kl_0'$) mittels des "O-UPDATE"-Befehls an die zumindest eine dezentrale Einheit (TN1, TN2, TN3) übermittelt wird.

10. Anordnung mit Mitteln zum Übermitteln von Informationen zwischen einer zentralen (DSLAM) und zumindest einer dezentralen Einheit (TN1, TN2, TN3) in einem Kommunikationsnetz, bei der in der zumindest einen dezentralen Einheit (TN1, TN2, TN3) Mittel vorgesehen sind zum Erfassen eines einen Abstand zwischen der zentralen (DSALM) und der zumindest einen dezentralen Einheit (TN1, TN2, TN3) repräsentierenden Werts ($kl_0$) sowie Mittel zum

Übermitteln des erfassten Werts ($kl_0$) an die zentrale Einheit (DSLAM),
**dadurch gekennzeichnet,**
**dass** in der zentralen Einheit (DSLAM) Mittel vorgesehen sind zum Ermitteln eines einen fiktiven Abstand zwischen der zentralen (DSALM) und der zumindest einen dezentralen Einheit (TN1, TN2, TN3) repräsentierenden Werts ($kl_0$') anhand des den Abstand repräsentierenden Werts ($kl_0$) sowie Mittel zum Übermitteln des den fiktiven Abstand repräsentierenden Werts ($kl_0$') an die zumindest eine dezentrale Einheit (TN1, TN2, TN3), wobei die Mittel zum Übermitteln der Informationen derart ausgestaltet sind, dass das Übermitteln der Informationen in Abhängigkeit von dem den fiktiven Abstand repräsentierenden Wert ($kl_0$') erfolgt, wobei der fiktive Abstand einen Abstand zwischen der zentralen Einheit und der mindestens einen dezentralen Einheit angibt, um mit einer optimierten Sendeleistung zu senden.

11. Anordnung nach Anspruch 10,
**dadurch gekennzeichnet,**
**dass** in der dezentralen Einheit (TN1, TN2, TN3) Mittel vorgesehen sind zum Bestimmen eines spektraler Verlaufs der Sendeleistungsdichte mittels des übermittelten, den fiktiven Abstand repräsentierenden Werts ($kl_0$'), wobei die Mittel zum Übermitteln der Informationen derart ausgestaltet sind, dass die Übermittlung der Informationen in Abhängigkeit von dem spektralen Verlauf der Sendeleistungsdichte erfolgt.

12. Zentrale Einheit (DSLAM) für eine Anordnung nach Anspruch 10 oder 11,
**dadurch gekennzeichnet,**
**dass** Mittel vorgesehen sind zum Empfangen eines übermittelten Werts ($kl_0$), Mittel zum Ermitteln eines einen fiktiven Abstand zwischen der zentralen (DSALM) und der zumindest einen dezentralen Einheit (TN1, TN2, TN3) repräsentierenden Werts ($kl_0$') anhand des empfangenen Werts ($kl_0$) sowie Mittel zum Übermitteln des den fiktiven Abstand repräsentierenden Werts ($kl_0$'), wobei der fiktive Abstand einen Abstand zwischen der zentralen Einheit und der mindestens einen dezentralen Einheit angibt, um mit einer optimierten Sendeleistung zu senden.

**Claims**

1. Method for transmitting information between a central unit (DSLAM) and at least one decentralized unit (TN1, TN2, TN3) in a communication network, in which a value ($kl_0$) representing a distance between the central unit (DSLAM) and the at least one decentralized unit (TN1, TN2, TN3) is detected in the at least one decentralized unit (TN1, TN2, TN3) and this value ($kl_0$) is transmitted to the central unit (DSLAM),
**characterized in that** a value ($kl_0$') representing a fictitious distance between the central unit and the at least one decentralized unit is determined in the central unit (DSLAM) by means of the value ($kl_0$) representing the distance, wherein the fictitious distance indicates a distance between the central unit and the at least one decentralized unit, in order to transmit with an optimized transmission power, this fictitious distance is transmitted to the at least one decentralized unit (TN1, TN2, TN3) and the information is transmitted in dependence on the value ($kl_0$') representing the fictitious distance.

2. Method according to Claim 1,
**characterized in that** a spectral variation of the transmission power density is determined in the decentralized unit (TN1, TN2, TN3) by means of the transmitted value ($kl_0$') representing the fictitious distance and the information is transmitted in dependence on the spectral variation of the transmission power density.

3. Method according to Claim 1 or 2,
**characterized in that** the detection of the value ($kl_0$) representing the distance and the transmission of the value ($kl_0$) representing the distance take place within a training phase.

4. Method according to Claim 1 or 2,
**characterized in that** the detection of the value ($kl_0$) representing the distance, the transmission of the value ($kl_0$) representing the distance, the determination of the value ($kl_0$') representing the fictitious distance and the transmission of the value ($kl_0$') representing the fictitious distance take place during a training phase.

5. Method according to one of the preceding claims, **characterized in that** the value ($kl_0$) representing the distance is derived from an attenuation occurring during the transmission of the information.

6. Method according to one of the preceding claims, **characterized in that** information is transmitted according to an xDSL method.

7. Method according to one of the preceding claims, **characterized in that** information is transmitted in accordance with the VDSL or VDSL2 method.

8. Method according to one of the preceding claims, **characterized in that** the transmission of information and/or the training phase take place in accordance with ITU standards G.993.2 and/or G.997.1.

9. Method according to Claim 8,
   **characterized in that** the value $(kl_0')$ representing the transmission power is transmitted to the at least one decentralized unit (TN1, TN2, TN3) by means of the "O-UPDATE" command.

10. Arrangement comprising means for transmitting information between a central unit (DSLAM) and at least one decentralized unit (TN1, TN2, TN3) in a communication network, in which, in the at least one decentralized unit (TN1, TN2, TN3), means are provided for detecting a value $(kl_0)$ representing a distance between the central unit (DSLAM) and the at least one decentralized unit (TN1, TN2, TN3), and means for transmitting the detected value $(kl_0)$ to the central unit (DSLAM),
    **characterized in that**, in the central unit (DSLAM), means are provided for determining a value $(kl_0')$ representing a fictitious distance between the central unit (DSLAM) and the at least one decentralized unit (TN1, TN2, TN3) by means of the value $(kl_0)$ representing the distance, and means for transmitting the value $(kl_0')$ representing the fictitious distance to the at least one decentralized unit (TN1, TN2, TN3), the means for transmitting the information being configured in such a manner that the information is transmitted in dependence on the value $(kl_0')$ representing the fictitious distance, wherein the fictitious distance indicates a distance between the central unit and the at least one decentralized unit, in order to transmit with an optimized transmission power.

11. Arrangement according to Claim 10,
    **characterized in that**, in the decentralized unit (TN1, TN2, TN3), means are provided for determining a spectral variation of the transmission power density by means of the transmitted value $(kl_0')$ representing the fictitious distance, the means for transmitting the information being configured in such a manner that the information is transmitted in dependence on the spectral variation of the transmission power density.

12. Central unit (DSLAM) for an arrangement according to Claim 10 or 11,
    **characterized in that** means are provided for receiving a transmitted value $(kl_0)$, means for determining a value $(kl_0')$ representing a fictitious distance between the central unit (DSLAM) and the at least one decentralized unit (TN1, TN2, TN3) by means of the received value $(kl_0)$, and means for transmitting the value $(kl_0')$ representing the fictitious distance, wherein the fictitious distance indicates a distance between the central unit and the at least one decentralized unit, in order to transmit with an optimized transmission power.

**Revendications**

1. Procédé destiné à la transmission d'informations entre une unité centrale (DSLAM) et au moins une unité décentralisée (TN1, TN2, TN3) dans un réseau de communication, dans lequel, dans l'unité décentralisée (TN1, TN2, TN3) au moins au nombre de un, une valeur $(kl_0)$ représentant une distance entre l'unité centrale (DSALM) et l'unité décentralisée (TN1, TN2, TN3) au moins au nombre de un est détectée, et cette valeur $(kl_0)$ est transmise à l'unité centrale (DSLAM),
   **caractérisé en ce que**,
   dans l'unité centrale (DSLAM), à l'aide de la valeur $(kl_0)$ représentant la distance, une valeur $(kl_0')$ représentant une distance fictive entre l'unité centrale et l'unité décentralisée au moins au nombre de un est déterminée, la distance fictive indiquant une distance entre l'unité centrale et l'unité décentralisée au moins au nombre de un pour émettre avec une puissance d'émission optimisée, cette distance fictive étant transmise à l'unité décentralisée (TN1, TN2, TN3) au moins au nombre de un, et la transmission des informations s'effectuant en fonction de la valeur $(kl_0')$ représentant la distance fictive.

2. Procédé selon la revendication 1,
   **caractérisé en ce que**,
   dans l'unité décentralisée (TN1, TN2, TN3), au moyen de la valeur $(kl_0')$ transmise représentant la distance fictive, un profil spectral de la densité de puissance d'émission est défini, et la transmission des informations s'effectue en fonction du profil spectral de la densité de puissance d'émission.

3. Procédé selon la revendication 1 ou 2,
   **caractérisé en ce que**
   la détection de la valeur ($kl_0$) représentant la distance et la transmission de la valeur ($kl_0$) représentant la distance s'effectuent à l'intérieur d'une phase d'apprentissage.

4. Procédé selon la revendication 1 ou 2,
   **caractérisé en ce que**
   la détection de la valeur ($kl_0$) représentant la distance, la transmission de la valeur ($kl_0$) représentant la distance, la détermination de la valeur ($kl_0$') représentant la distance fictive et la transmission de la valeur ($kl_0$') représentant la distance fictive s'effectuent pendant une phase d'apprentissage.

5. Procédé selon l'une des revendications précédentes,
   **caractérisé en ce que**
   la valeur ($kl_0$) représentant la distance est dérivée d'un amortissement survenant lors de la transmission des informations.

6. Procédé selon l'une des revendications précédentes,
   **caractérisé en ce que**
   la transmission d'informations s'effectue selon un procédé xDSL.

7. Procédé selon l'une des revendications précédentes,
   **caractérisé en ce que**
   la transmission d'informations s'effectue selon le procédé VDSL ou VDSL2.

8. Procédé selon l'une des revendications précédentes,
   **caractérisé en ce que**
   la transmission d'informations et/ou la phase d'apprentissage s'effectuent selon les standards ITU G.993.2 et/ou G.997.1.

9. Procédé selon la revendication 8,
   **caractérisé en ce que**
   la valeur ($kl_0$') représentant la puissance d'émission est transmise au moyen de l'instruction «O-UPDATE» à l'unité décentralisée (TN1, TN2, TN3) au moins au nombre de un.

10. Ensemble, avec des moyens destinés à la transmission d'informations entre une unité centrale (DSLAM) et au moins une unité décentralisée (TN1, TN2, TN3) dans un réseau de communication, dans lequel, dans l'unité décentralisée (TN1, TN2, TN3) au moins au nombre de un, il est prévu des moyens destinés à la détection d'une valeur ($kl_0$) représentant une distance entre l'unité centrale (DSALM) et l'unité décentralisée (TN1, TN2, TN3) au moins au nombre de un, ainsi que des moyens destinés à la transmission à l'unité centrale (DSLAM) de la valeur ($kl_0$) détectée
    **caractérisé en ce que**,
    dans l'unité centrale (DSLAM), il est prévu des moyens destinés à la détermination d'une valeur ($kl_0$') représentant une distance fictive entre l'unité centrale (DSLAM et l'unité décentralisée (TN1, TN2, TN3) au moins au nombre de un à l'aide de la valeur ($kl_0$) représentant la distance, ainsi que des moyens destinés à la transmission à l'unité décentralisée (TN1, TN2, TN3) au moins au nombre de un de la valeur ($kl_0$') représentant la distance fictive, les moyens destinés à la transmission des informations étant constitués de telle sorte que la transmission des informations s'effectue en fonction de la valeur ($kl_0$') représentant la distance fictive, la distance fictive indiquant une distance entre l'unité centrale et l'unité décentralisée au moins au nombre de un pour émettre avec une puissance d'émission optimisée.

11. Ensemble selon la revendication 10,
    **caractérisé en ce que**,
    dans l'unité décentralisée (TN1, TN2, TN3), il est prévu des moyens destinés à la définition d'un profil spectral de la densité de puissance d'émission au moyen de la valeur ($kl_0$') transmise représentant la distance fictive, les moyens destinés à la transmission des informations étant constitués de telle sorte que la transmission des informations s'effectue en fonction du profil spectral de la densité de puissance d'émission.

**12.** Unité centrale (DSLAM) pour un ensemble selon la revendication 10 ou 11,
**caractérisée en ce**
**qu'**il est prévu des moyens destinés à la réception d'une valeur $(kl_0)$ transmise, des moyens destinés à la détermination d'une valeur $(kl_0')$ représentant une distance fictive entre l'unité centrale (DSALM) et l'unité décentralisée (TN1, TN2, TN3) au moins au nombre de un à l'aide de la valeur $(kl_0)$ reçue, ainsi que des moyens destinés à transmission de la valeur $(kl_0')$ représentant la distance fictive, la distance fictive indiquant une distance entre l'unité centrale et l'unité décentralisée au moins au nombre de un pour émettre avec une puissance d'émission optimisée.

**IN DER BESCHREIBUNG AUFGEFÜHRTE DOKUMENTE**

**In der Beschreibung aufgeführte Patentdokumente**

• EP 1300964 A